# EUROPÄISCHE PATENTSCHRIFT

(11) **EP 2 561 746 B1**
(45) Veröffentlichungstag und Bekanntmachung des Hinweises auf die Patenterteilung: **31.12.2014**
(21) Anmeldenummer: 12170660.0
(22) Anmeldetag: 04.06.2012
(51) Int. Cl.: A01D 43/08

(54) **Landwirtschaftliche Erntemaschine**
Agricultural harvester
Moissonneuse agricole

(30) Priorität: 24.08.2011 DE 102011052945
(43) Veröffentlichungstag der Anmeldung: 27.02.2013
(73) Patentinhaber: CLAAS Selbstfahrende Erntemaschinen GmbH, 33428 Harsewinkel (DE)
(72) Erfinder: Look, Stefan, 47533 Kleve (DE)

(56) Entgegenhaltungen:
- EP-A1- 1 380 204
- EP-A1- 1 752 037
- EP-A1- 2 020 174
- US-A1- 2011 061 762

## Beschreibung

Die Erfindung betrifft eine landwirtschaftliche Erntemaschine gemäß dem Oberbegriff des Anspruchs 1.

Landwirtschaftliche Erntemaschinen, insbesondere selbstfahrende Feldhäcksler ernten bei der Erntefahrt Pflanzen vom Feld, zerkleinern diese mittels verschiedener Arbeitsaggregate und werfen das verarbeitete Erntegut schließlich durch eine auch als Auswurfkrümmer bezeichnete Überladeeinrichtung in einen Ladebehälter aus. Der Ladebehälter kann sich beispielsweise auf einem Anhänger befinden, der von einem Schlepper gezogen wird und sich zum Zweck der Überladung während der Erntefahrt neben oder hinter dem Feldhäcksler befindet.

Die zum Auswerfen der Ernteguts erforderliche kinetische Energie wird durch zumindest ein dem Feldhäcksler zugeordnetes Förderorgan aufgebracht. Hierbei handelt es sich insbesondere um einen sogenannten Nachbeschleuniger, der dem Häckselaggregat in Bezug auf die Erntegutförderrichtung nachgelagert im Förderschacht angeordnet ist und zur zusätzlichen Beschleunigung des Ernteguts vor Eintritt in die Überladeeinrichtung dient. Allgemein bringen auch andere Arbeitsaggregate eines Feldhäckslers, beispielsweise Einzugsaggregate, Häckselaggregat, Konditioniereinrichtung bereits kinetische Energie in das Erntegut ein, da sie das Erntegut - unter anderem - beschleunigen und somit ebenfalls als Förderorgane anzusehen sind. Die durch die Beschleunigung eingebrachte kinetische Energie des Ernteguts verhindert jedenfalls, dass sich das Erntegut im aufsteigenden Förderschacht bzw. in der Überladeeinrichtung aufstaut und diese verstopft.

Aus dem Stand der Technik, beispielsweise der EP 1 380 204, ist ein Förderorgan in Form eines Nachbeschleunigers für einen selbstfahrenden Feldhäcksler bekannt, mit dem sich die Beschleunigung des Ernteguts während des Erntebetriebs verstellen lässt. Dazu lässt sich eine Spaltweite des Nachbeschleunigers durch Bewegung der Nachbeschleunigertrommel gegenüber dem ummantelnden Maschinengehäuse verändern. Die Verstellung erfolgt in Abhängigkeit von Erntegutparametern wie der Dichte, Feuchte und/oder Geschwindigkeit des Ernteguts mit dem Ziel, auch bei unterschiedlicher Erntegutbeschaffenheit einen sicheren Erntegutfluss zu gewährleisten, um Verstopfungen der Überladeeinrichtung zu vermeiden.

Die EP 1 752 037 A1 beschreibt ein Verfahren und eine Steuervorrichtung zum Überladen von Erntegut von einer Erntemaschine auf ein Transportfahrzeug, bei dem das Erntegut beschleunigt und durch einen Förderschacht einer Überladeeinrichtung auf einen Zielpunkt auf dem Transportfahrzeug ausgeworfen wird. Dabei wird die Beschleunigung des Ernteguts zum Überladen in Abhängigkeit von zumindest einem Parameter gesteuert, welcher ein Maß für einen Überladeabstand bildet.

Eine Herausforderung bei der Ernte mittels eines Feldhäckslers besteht darin, das annähernd kontinuierlich durch die Überladeeinrichtung ausgeworfene Erntegut abzutransportieren. Zum Einsatz kommende Ladebehälter werden dazu in der Regel von Schleppern neben oder hinter dem erntenden Feldhäcksler gezogen oder sind auf entsprechend selbstfahrende Transportfahrzeuge gebaut. Da deren Ladekapazität begrenzt ist, müssen diese während eines Ernteeinsatzes vielfache Abtransporte durchführen. Jeder Abtransport verursacht jedoch bereits für sich Kosten und bedeutet, dass ein anderer Ladebehälter bereitzustellen ist, um den Erntevorgang nicht unterbrechen zu müssen. Aus ökonomischen Gründen besteht daher ein Bedarf, die Ladekapazität bei jeder Befüllung eines Ladebehälters voll auszuschöpfen, um möglichst wenig Abfuhren durchführen zu müssen.

Um die Kapazität eines Ladebehälters voll zu nutzen und einen Befüllvorgang möglichst zügig abzuschließen, wird in der Praxis versucht, den Ladebehälter bis an seine Befüllgrenze mit Erntegut zu befüllen. Der Fahrer des Feldhäckslers richtet dazu den Erntegutstrahl mittels der zumeist verstellbar ausgeführten Überladeeinrichtung in den Ladebehälter mit dem Ziel, diesen bis an dessen Grenze zu befüllen. Dabei kommt es jedoch jeweils zum Ende eines Befüllvorgangs regelmäßig zu Erntegutverlusten, die dadurch entstehen, dass das mit hoher Geschwindigkeit aus der Überladeeinrichtung ausgeworfene Erntegut über den Ladebehälter "hinausschießt", wenn nämlich die Befüllung des Ladebehälters sich der Höhe der Bordwand nähert bzw. diese sogar örtlich überschreitet. Diese Art von Erntegutverlusten tritt umso eher und umso stärker auf, je flacher der Erntegutstrahl gerichtet ist, da das Erntegut dann unter einem umso kleineren Winkel auf das im Ladebehälter bereits befindliche Schüttgut auftrifft und zum Abprallen von der gebildeten Oberfläche neigt. Auch wird Erntegut sogar aus dem Ladebehälter herausgeblasen.

Vor diesem Hintergrund ist es eine Aufgabe der vorliegenden Erfindung, eine Erntemaschine der eingangs genannten Art anzugeben, die im Rahmen des Überladevorgangs in einen Ladebehälter eine bessere Ausschöpfung dessen Ladekapazität gewährleistet und zur Vermeidung von Erntegutverlusten beiträgt, so dass insgesamt ein effizienterer Überladevorgang erreicht wird.

Die Aufgabe wird gelöst durch eine Erntemaschine gemäß Patentanspruch 1. Diese zeichnet sich aus durch eine Einrichtung zur Erfassung eines Füllzustands des Ladebehälters sowie durch Mittel zur Veränderung der Geschwindigkeit des Ernteguts im Auftreffpunkt in Abhängigkeit vom Füllzustand des Ladebehälters.

Der erfindungsgemäßen Lösung liegt zunächst die Erkenntnis zugrunde, dass das Erntegut beim Auswerfen durch eine Überladeeinrichtung mit einer bestimmten Geschwindigkeit in einem Auftreffpunkt auf dem Ladebehälter auftrifft. Diese Auftreffgeschwindigkeit beinhaltet im mathematischen Sinne einen Geschwindigkeitsbetrag und eine Richtung. Die Größen lassen sich allgemein durch verschiedene Maßnahmen beeinflussen, insbesondere durch Veränderung der Beschleunigung des Ernteguts in vorgelagerten Förderorganen und/oder durch Veränderung der Form der Wurfbahn des Ernteguts.

Erfindungsgemäß wurde erkannt, dass sich durch Beeinflussung der Geschwindigkeit vorteilhafte Effekte im Zusammenhang der Erntegutüberladung erzielen lassen, da bei der Befüllung eines Ladebehälters Aspekte zu berücksichtigen sind, die sich im Laufe der Befüllung ändern. Zu Beginn der Befüllung - also bei leerem Ladebehälter oder bei lokal niedriger Füllhöhe im Ladebehälter - ist es unproblematisch, das Erntegut mit verhältnismäßig hoher Geschwindigkeit im Ladebehälter auftreffen zu lassen, da die relativ (in Bezug auf die aktuelle Befüllhöhe) große Höhe der Bordwand des Ladebehälters Erntegutverluste verhindert. Die verhältnismäßig hohe Auftreffgeschwindigkeit sorgt in diesem Stadium vorteilhaft dafür, dass das Erntegut im Ladebehälter hoch verdichtet wird. Dabei kann der Erntegutstrahl zur nochmaligen Erhöhung der Verdichtung vorteilhaft nicht nur mit einem hohen Geschwindigkeitsbetrag, sondern - falls unter den konkreten Verladeumständen möglich - auch mit einem möglichst steilen Winkel im Auftreffpunkt auf die Oberfläche im Ladebehälter auftreffen. Die Ladekapazität des Ladebehälters wird durch die erzielte hohe Verdichtung des verladenen Ernteguts intensiv ausgeschöpft.

Zum Ende des Befüllvorgangs - also mit Annäherung an eine (zumindest lokale) Befüllgrenze des Ladebehälters - haben eine hohe Erntegutgeschwindigkeit und/oder ein flacher Winkel im Auftreffpunkt den Nachteil, dass bereits erwähnte Erntegutverluste auftreten können. Daher ist es vorteilhaft, in diesem Stadium der Befüllung das Erntegut mit einer gegenüber der Anfangsphase reduzierten Geschwindigkeit im Auftreffpunkt im Ladebehälter auftreffen zu lassen. Auch in dieser Phase kann es daneben vorteilhaft sein, das Erntegut mit einem möglichst steilen Winkel im Auftreffpunkt auf die Oberfläche im Ladebehälter auftreffen zu lassen, da steiles Auftreffen - ergänzend zu reduzierter Geschwindigkeit - ein Hinausschießen bzw. Abprallen des Ernteguts aus dem Ladebehälter erschwert.

Zur selbsttätigen Umsetzung einer vom Befüllzustand des Ladebehälters abhängigen Überladestrategie weist die Erntemaschine erfindungsgemäß eine Einrichtung zur Erfassung eines Befüllzustands des Ladebehälters sowie damit gekoppelte Mittel auf, um die Geschwindigkeit des Ernteguts im Auftreffpunkt in Abhängigkeit von einem Füllzustand des Ladebehälters zu beeinflussen. Die eingangs genannte Aufgabe wird damit gelöst. Im Rahmen der Erfindung können unterschiedliche, nachfolgend erläuterte Mittel zur Beeinflussung der Auftreffgeschwindigkeit zum Einsatz kommen.

Gemäß einer vorteilhaften Umsetzung des Erfindungsgedankens weist die Erntemaschine eine Steuereinheit auf, die betreibbar ist, durch Ansteuerung des Förderorgans die Beschleunigung des Ernteguts zu verändern. Das Förderorgan ist demnach vorteilhaft so ausgebildet, dass dieses eine veränderliche Beschleunigung des Ernteguts zulässt. Die im Förderorgan bewirkte Beschleunigung des Ernteguts steht in starkem Zusammenhang mit der Geschwindigkeit des Ernteguts im Auftreffpunkt in den Ladebehälter. Daher stellt eine Ansteuerung des zumindest einen Förderorgans eine besonders einfache und effektive Maßnahme dar, die Auftreffgeschwindigkeit des Ernteguts zu beeinflussen.

Konstruktiv einfach umsetzen lässt sich eine veränderliche Beschleunigung, wenn es sich bei dem Förderorgan um einen Nachbeschleuniger handelt. Denn ein Nachbeschleuniger bietet den Vorteil, dass sich die Beschleunigung des Ernteguts einfach durch Verstellung einer Drehzahl und/oder einer Spaltweite und/oder einer Schaufelstellung und/oder einer Luftzuführung des Nachbeschleunigers verändern lässt. In diesem Zusammenhang sei auf die EP 1 380 204 verwiesen, welche technische Umsetzungsmöglichkeiten für einen in der Beschleunigung veränderlichen Nachbeschleuniger erläutert.

Alternativ oder ergänzend ist der Erntemaschine eine Steuereinheit zugeordnet, die betreibbar ist, durch Ansteuerung zumindest eines der Überladeeinrichtung zugeordneten Aktors einen die Wurfbahn des Ernteguts beeinflussenden Zustand der Überladeeinrichtung zu verändern. Dieser Ausgestaltung liegt die Erkenntnis zugrunde, dass auch die Wurfbahn des Ernteguts die Geschwindigkeit des Ernteguts im Auftreffpunkt beeinflussen kann. Gemäß dieser Ausgestaltung ist die Überladeeinrichtung vorteilhaft hinsichtlich der Höhe, des Abwurfwinkels (zumeist vorgegeben durch die Stellung einer Krümmerklappe) und/oder deren Länge (z.B. realisiert durch ein teleskopierbares Auswurfrohr) in deren Zustand veränderlich, wobei die Verstellung jeweils von einem entsprechenden Aktor vorgenommen wird. Demnach könnte die Steuereinheit beispielsweise durch Verstellung der Überladeeinrichtung in einen bestimmten Zustand (Hochstellen der Überladeeinrichtung, Öffnen der Auswurfklappe) erreichen, dass das Erntegut - anstatt mit flacher Wurfbahn - in einem hohen Bogen ausgeworfen wird, was vorteilhaft zu einer - gegenüber flacher Wurfbahn - verringerten Geschwindigkeit des Ernteguts im Auftreffpunkt führen kann, wenn dieses beispielsweise nur noch schwerkraftbedingt herunterfällt.

Vorteilhaft ist der Überladeeinrichtung also ein Aktor zu deren Höhenverstellung und/oder ein Aktor zur Veränderung eines Abwurfwinkels und/oder ein Aktor zur Längenverstellung der Überladeeinrichtung zugeordnet, wobei der Aktor von der Steuereinheit ansteuerbar ist. Weitere Aktoren für sonstige die Wurfbahn beeinflussende Stellmaßnahmen sind denkbar.

Bei der erfindungsgemäß vorgesehenen Einrichtung zur Erfassung eines Füllzustands des Ladebehälters kann es sich grundsätzlich um jede dazu geeignete Einrichtung, beispielsweise eine Waage oder sonstige Messeinrichtung handeln. Gemäß einer vorteilhaften Weiterbildung umfasst die Einrichtung zur Füllzustandserfassung eine auf den Auftreffpunkt des Ernteguts gerichtete Kamera, wobei die Einrichtung betreibbar ist, aus dem erfassten Bild der Kamera einen Befüllzustand des Ladebehälters abzuleiten. Die Erfassung des Füllzustands erfolgt demnach bevorzugt optisch, da so auf konstruktiv einfache Weise besonders umfassende Informationen über den Befüllzustand gewonnen werden können. Es können eine oder mehrere Kameras zum Einsatz kommen. Diese können vorteilhaft an der Überladeeinrichtung, an der Erntemaschine und/oder am Ladebehälter angeordnet sein, um den Füllzustand optisch zu erfassen. Dabei kann die Erfassung des Füllzustands unter logischer Gliederung des Ladebehälters in unterschiedliche Flächenbereiche lokal vorgenommen werden, d.h. dass für jeden Flächenbereich im Ladebehälter ein individueller Füllzustand ermittelt wird, so dass im Ergebnis ein Feld einzelner Füllzustände für den Ladebehälter vorliegt. Eine daran angepasste lokal individuelle Befüllung ist damit möglich. Alternativ kann für den gesamten Ladebehälter ein Füllzustand ermittelt werden.

In bevorzugter Ausführung umfasst der Befüllzustand Informationen über die Höhe der Befüllung zumindest in einem Bereich des Ladebehälters. Anhand dieser Information kann dann - beispielsweise bei Kenntnis der Behälterhöhe - das verbleibende Befüllpotential ermittelt werden.

Vorteilhaft umfasst der Befüllzustand Informationen über die Kontur, d.h. den Oberflächenverlauf der Befüllung zumindest in einem Bereich des Ladebehälters. Eine solche Information könnte insbesondere dazu dienen, einen Auftreffwinkel des Ernteguts im Hinblick auf den aktuellen Befüllzustand zu optimieren.

Gemäß einer weiteren vorteilhaften Weiterbildung ist die Einrichtung zur Füllzustandserfassung betreibbar, aus dem erfassten Bild der Kamera die Lage des Auftreffpunktes des Ernteguts relativ zu den seitlichen Begrenzungen des Ladebehälters abzuleiten. Dadurch könnte beispielsweise berücksichtigt werden, dass in der Nähe eines Randes des Ladebehälters auftreffendes Erntegut bei Erreichen einer kritischen Füllhöhe eher dazu neigt, aus dem Ladebehälter auszutreten als mittig im Ladebehälter auftreffendes Erntegut. Eine entsprechende Ansteuerung zur Beeinflussung der Auftreffgeschwindigkeit ist denkbar.

Gemäß einer bevorzugten Weiterbildung der Erfindung ist die Steuereinheit betreibbar, bei einer geringen Befüllung des Ladebehälters - beispielsweise durch Ansteuerung des Förderorgans und/oder durch Ansteuerung des zumindest einen Aktors der Überladeeinrichtung - einen Überladezustand herbeizuführen, bei dem das im Ladebehälter auftreffende Erntegut eine hohe Verdichtung erreicht. Hierzu sei angemerkt, dass eine geringe Befüllung auch rein lokal vorliegen kann. Bei entsprechender Erfassung könnte ein veränderter Überladezustand bevorzugt nur lokal herbeigeführt werden, weil beispielsweise an anderen Stellen des Ladebehälters bereits eine kritische Befüllhöhe erreicht ist. Allgemein erfolgen die Maßnahmen zu Veränderung der Auftreffgeschwindigkeit bevorzugt abhängig vom Ort, d.h. lokal.

Es können unterschiedliche Strategien bei der Befüllung verfolgt werden. Gemäß einer bevorzugten Strategie wird der Ladebehälter zunächst über dessen gesamte Fläche mit einer hohen Verdichtung befüllt. Erst ab Erreichen kritischer Befüllzustände auf der gesamten Fläche wird dann mit verringerter Verdichtung örtlich individuell weiter befüllt, bis jeweils kritische Befüllzustände in allen Bereichen des Ladebehälters vorliegen.

Alternativ könnte jeweils lokal an gleicher Stelle bzw. gleichen Bereichen des Ladebehälters eine Befüllung von einer Leerhöhe bis zum Erreichen einer kritischen Befüllhöhe erfolgen, wobei währenddessen die erfindungsgemäße Anpassung der Auftreffgeschwindigkeit erfolgt.

Bevorzugt könnte die Steuereinheit betreibbar sein, - beispielsweise durch Ansteuerung des Förderorgans und/oder durch Ansteuerung des zumindest einen Aktors der Überladeeinrichtung - einen Überladezustand herbeizuführen, bei dem das Erntegut im Auftreffpunkt mit einem annähernd rechten Winkel auf eine Oberfläche im Ladebehälter auftrifft. In der Anfangsphase der Befüllung kann so eine hohe Verdichtung des Ernteguts erzielt werden. In der Endphase der Befüllung können so Erntegutverluste vermieden werden. Zu einer derartigen Ansteuerung könnte bevorzugt auf eine mittels der Kamera erfasste Kontur der Oberfläche zurückgegriffen werden.

Vorteilhaft ist die Steuereinheit betreibbar, bei Annäherung oder Erreichen eines kritischen Füllzustands - beispielsweise durch Ansteuerung des Förderorgans und/oder durch Ansteuerung des zumindest einen Aktors der Überladeeinrichtung - einen Überladezustand herbeizuführen, bei dem sich im Auftreffpunkt im Ladebehälter eine Geschwindigkeit des Ernteguts ergibt, die keine bzw. verringerte Erntegutverluste verursacht.

Bei der erfindungsgemäßen Erntemaschine handelt es sich bevorzugt um einen selbstfahrenden Feldhäcksler.

Die Erfindung wird im Folgenden unter Hinweis auf die beigefügten Figuren anhand eines Ausführungsbeispiels und verschiedener Anwendungen näher erläutert. Daraus ergeben sich auch weitere Einzelheiten und Vorteile der Erfindung. Es zeigen:
- Fig. 1: eine erfindungsgemäße landwirtschaftliche Erntemaschine in Form eines selbstfahrenden Feldhäckslers in schematischer Seitenansicht,
- Fig. 2a: eine schematische Ansicht eines Überladevorgangs zur Seite zu Beginn der Befüllung eines Ladebehälters,
- Fig. 2b: eine schematische Ansicht eines Überladevorgangs zur Seite zum Ende der Befüllung des Ladebehälters,
- Fig. 3a: eine schematische Seitenansicht eines Überladevorgangs nach hinten zu Beginn der Befüllung eines Ladebehälters,
- Fig. 3b: eine schematische Seitenansicht eines Überladevorgangs nach hinten zum Ende der Befüllung des Ladebehälters.

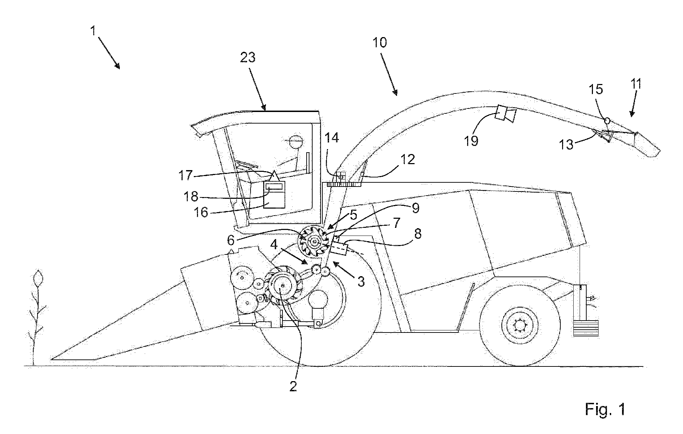

Fig. 1 zeigt ein Ausführungsbeispiel einer erfindungsgemäßen landwirtschaftlichen Erntemaschine in Form eines selbstfahrenden Feldhäckslers 1 in schematischer Seitenansicht. Während der Erntefahrt schneidet der Feldhäcksler 1 mittels eines (nicht bezeichneten) Vorsatzgeräts Pflanzen vom Feld, um das geerntete Pflanzenmaterial über Einzugsorgane (nicht bezeichnet) einem Häckselaggregat 2 zuzuführen. Dort wird das Erntegut auf für sich bekannte Weise zerkleinert und gelangt in einen Förderschacht 3, der sich vom Häckselaggregat 2, das unterhalb einer Fahrerkabine 23 angeordnet ist, mit aufsteigendem Verlauf in einen Bereich hinter der Fahrerkabine 23 erstreckt und in eine Überladeeinrichtung 10 mündet.

Im Förderschacht 3 ist eine Konditioniereinrichtung 4 angeordnet. Ein Nachbeschleuniger 5 ist dieser Konditioniereinrichtung 4 in Bezug auf die Gutstromrichtung nachgeordnet. Der Nachbeschleuniger 5 umfasst eine mit einer Vielzahl von Schaufeln 7 bestückte Nachbeschleunigertrommel 6, die drehantreibbar gelagert ist, um Erntegut, das durch den Förderschacht 3 in den Wirkungsbereich der Schaufeln 7 gelangt, in Gutstromrichtung durch einen von den Schaufeln 7 erzeugten Luftstrom zu beschleunigen. Die Rotationsachse der Nachbeschleunigertrommel 6 ist mittels eines Stellmotors 8 verschiebbar (angedeutet durch die gestrichelte Linie), so dass ein zwischen den Schaufeln 7 und der Rückwand des Nachbeschleunigers (entspricht im Bild der rechten Kante des Förderschachts 3) gebildeter Nachbeschleunigerspalt motorisch verstellbar ist. Da die Nachbeschleunigertrommel 6 unter anderem zusammen mit dem Häckselaggregat 2 angetrieben wird, ist über die realisierte Spaltmaßverstellbarkeit - trotz gleichbleibender Antriebsdrehzahl - eine Möglichkeit der Einflussnahme auf die im Nachbeschleuniger 5 ausgeübte Beschleunigung des Ernteguts geschaffen. Ein Spaltmaßsensor 9 kann vorgesehen sein, um das eingestellte Spaltmaß zu erfassen, das bei bekannter Drehzahl Maß für die Beschleunigung des Nachbeschleunigers 5 ist. Für einen Fachmann versteht sich, dass auch andere bzw. anders gestaltete Förderorgane als der gezeigte Nachbeschleuniger 5 eine veränderliche Beschleunigung von Erntegut bewirken können.

Die als Auswurfkrümmer 10 ausgeführte Überladeeinrichtung ist (unter anderem) höhenverschwenkbar gegenüber dem Rahmen des Feldhäckslers 1 gelagert. Ein zwischen Rahmen und Auswurfkrümmer 10 wirkender Hubzylinder 12 dient zur Verstellung der Höhe des Auswurfkrümmers 10. Ein Höhensensor 14, beispielsweise ein Drehpotentiometer, kann den jeweils eingestellten Höhenschwenkwinkel erfassen.

Am maschinenabgewandten Ende des Auswurfkrümmers 10 ist eine Auswurfklappe 11 angeordnet, durch deren Verschwenkbarkeit sich der Auswurfwinkel des Ernteguts aus dem Auswurfkrümmer 10 beeinflussen lässt. Die Verstellung wird durch einen Stellzylinder 13 bewirkt, wobei ein der Auswurfklappe 11 zugeordneter Winkelsensor 15 die Klappenstellung erfasst. In Kombination mit dem erfassten Höhenschwenkwinkel des Auswurfkrümmers (Sensor 14) lässt sich aus der Winkelstellung der Auswurfklappe 11 der Auswurfwinkel gegenüber der Horizontalebene errechnen.

Zur optischen Erfassung eines erreichten Auftreffpunkts ("P", vgl. weitere Fig.) des im Erntebetrieb ausgeworfenen Ernteguts sowie zur optischen Erfassung der Lage, Form, Abmessung und eines Befüllzustands eines Ladebehälters (vgl. weitere Fig.) ist am Auswurfkrümmer 10 eine auf einen Wurfzielbereich des Auswurfkrümmers 10 ausgerichtete Kamera 19 angebracht.

In der Fahrerkabine 23, die Platz für einen Maschinenbediener bietet, ist eine Steuerungseinrichtung 16 angeordnet, bei der es sich um einen digitalen Signalprozessor handelt. Der Steuerungseinrichtung 16 sind eine optische Ausgabeeinheit 18 zur Anzeige von Informationen an den Maschinenbediener und ein Schalter 17 zur Aktivierung und Deaktivierung der Steuerung zugeordnet. Die Steuerungseinrichtung 16 ist über - aus Übersichtsgründen nicht dargestellte - Signalleitungen mit Aktoren der Überladeeinrichtung 10 wie dem Hubzylinder 12 und dem Stellzylinder 13 und mit Sensoren wie dem Spaltmaßsensor 9, dem Höhensensor 14, dem Winkelsensor 15 und der Kamera 19 verbunden, um diese anzusteuern bzw. Signale von diesen zu empfangen. Für einen Fachmann versteht sich, dass auch andere bzw. ergänzende Aktoren und Sensoren zum Einsatz kommen können.

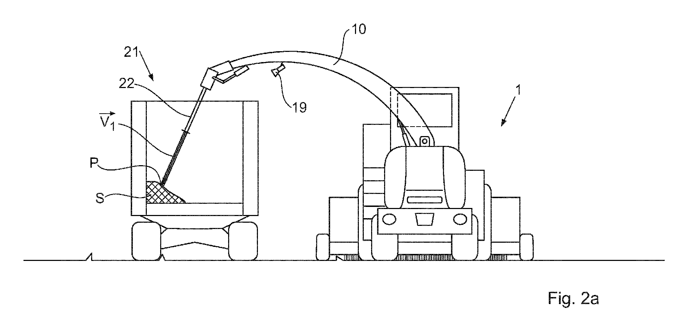

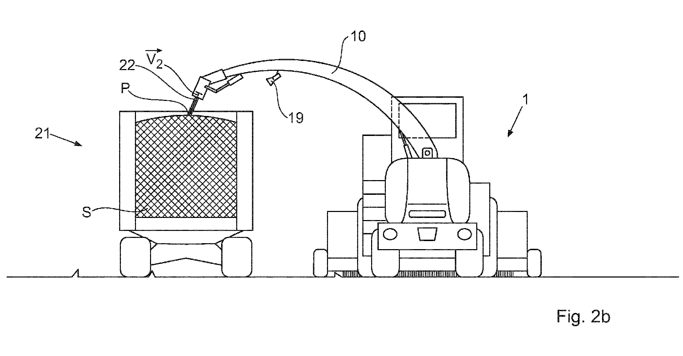

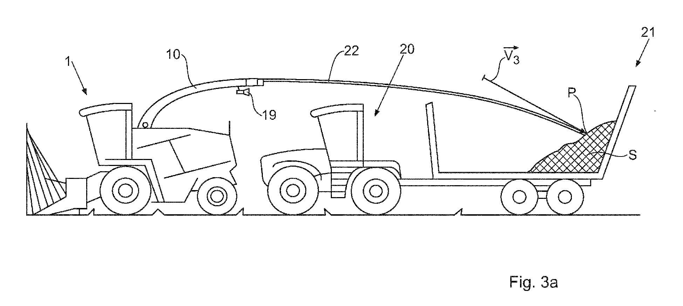

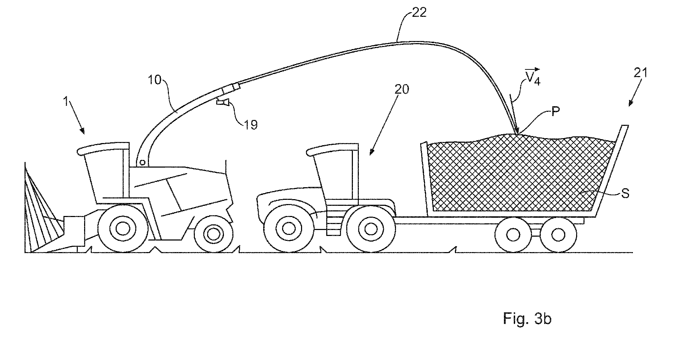

Die Wirkungsweise des erfindungsgemäßen Feldhäckslers 1 sei nun anhand der Fig. 2a, 2b und 3a, 3b erläutert, in denen beispielhafte Überladevorgänge von einem Feldhäcksler 1 in einen Ladebehälter 21 in unterschiedlichen Situationen gezeigt ist. Bei dem in den Fig. 2a, 2b und 3a, 3b gezeigten, zur Übersicht vereinfacht dargestellten Feldhäcksler 1 handelt es sich jeweils um den Feldhäcksler 1 gemäß Fig. 1. Zu Erläuterungen einzelner daran vorhandener Merkmale sei zur Vermeidung von Wiederholungen auf die bereits gemachten Ausführungen verwiesen.

Die Fig. 2a und 2b zeigen den Feldhäcksler 1 von hinten bei der Erntefahrt über ein Feld beim Überladen von Erntegut 22 in einen seitlich neben dem Feldhäcksler 1 befindlichen Ladebehälter 21 in verschiedenen Befüllsituationen. Während Fig. 2a den Beginn eines Befüllvorgangs eines Ladebehälters 21 zeigt, ist in Fig. 2b das Ende des Befüllvorgangs dargestellt.

In Fig. 2a wirft der Feldhäcksler 1 durch den Auswurfkrümmer 10 Erntegut 22 in Form eines gerichteten Erntegutstrahls in einen Ladebehälter 21. Wie der schematischen Schnittdarstellung des Ladebehälters 21 zu entnehmen, ist dieser erst in geringem Maße befüllt, angedeutet durch die Anhäufung von Schüttgut S im linken unteren Bereich des Ladebehälters 21. Das ausgeworfene Erntegut 22 trifft im Auftreffpunkt P im Ladebehälter 21 auf, wodurch die Menge des Schüttguts S wächst. Die am Auswurfkrümmer 10 angeordnete Kamera 19 erfasst optisch den Auftreffpunkt P des Ernteguts 22 sowie die Abmessungen und die Befüllung des Ladebehälters 21 und leitet aus den Informationen durch Bildauswertung den Befüllzustand des Ladebehälter 21 ab.

Da der Ladebehälter 21 erst in geringem Maße befüllt ist und demnach - aufgrund des hohen Überstands der Bordwände des Ladebehälters 21 - keine Gefahr von Erntegutverlusten besteht, wird das Erntegut 22 erfindungsgemäß stark beschleunigt, um mit einer hohen Geschwindigkeit v₁ (angedeutet als langer Vektorpfeil) den Auftreffpunkt P zu erreichen, so dass das Schüttgut S eine möglichst hohe Verdichtung aufweist. Die Ladekapazität des Ladebehälters 21 kann damit in hohem Maße ausgeschöpft werden.

Mit zunehmender Befüllung des Ladebehälters 21 nimmt die Gefahr von Erntegutverlusten zu. In Fig. 2b, welche eine gegenüber Fig. 2a fortgeschrittene Befüllsituation zeigt, erfasst die Kamera 19, dass eine kritische Befüllung des Ladebehälters 21 erreicht wird. Erfindungsgemäß wird daher das nun im sehr viel höher liegenden Auftreffpunkt P auftreffende Erntegut 22 vom Feldhäcksler 1 nun sehr viel weniger beschleunigt (beispielsweise gerade so stark, dass eine Verstopfung des Auswurfkrümmers 10 verhindert wird), um mit einer geringen Geschwindigkeit v₂ (angedeutet als kurzer Vektorpfeil) den Auftreffpunkt P zu erreichen. Die geringe Geschwindigkeit v₂ im Auftreffpunkt P verhindert, dass Erntegut 22 über die - jetzt nur noch einen geringen Überstand aufweisende - Bordwand des Ladebehälters 21 hinausschießt.

In erfindungsgemäßer Weise sorgt gemäß den Fig. 2a und 2b somit eine Beeinflussung der Geschwindigkeit des auftreffenden Ernteguts in Abhängigkeit vom Füllzustand des Ladebehälters für einen effizienteren Ladevorgang. Zur Beeinflussung der Auftreffgeschwindigkeit dient eine Veränderung der Beschleunigung des Ernteguts im Nachbeschleuniger 5, vorzugsweise vorgenommen durch eine Spaltverstellung mittels des Stellmotors 8 (vgl. Erläuterung zu Fig. 1). Die Verstellung wird durch die Steuereinrichtung 16 veranlasst, welche wiederum von der Kamera 19 die Information über den für die Verstellung relevanten Füllzustand erhält.

Die Fig. 3a und 3b zeigen gemäß einer weiteren erfindungsgemäßen Anwendung den Feldhäcksler 1 von der Seite bei der Erntefahrt über ein Feld beim Überladen von Erntegut 22 in einen hinter dem Feldhäcksler 1 befindlichen, von einem Schlepper 20 gezogenen Ladebehälter 21 in verschiedenen Befüllsituationen. Während Fig. 3a den Beginn des Befüllvorgangs des Ladebehälters 21 zeigt, ist in Fig. 3b das Ende des Befüllvorgangs dargestellt.

In Fig. 3a wirft der Feldhäcksler 1 durch den Auswurfkrümmer 10 Erntegut 22 in Form eines flach gerichteten (zunächst zur Horizontalebene annähernd parallelen) Erntegutstrahls in einen Ladebehälter 21, der sich hinter einem ziehenden Schlepper 20 befindet. Wie der schematischen Schnittdarstellung des Ladebehälters 21 zu entnehmen, ist dieser erst in geringem Maße befüllt, angedeutet durch die Anhäufung von Schüttgut S im hinteren Bereich des Ladebehälters 21. Das ausgeworfene Erntegut 22 trifft im Auftreffpunkt P im Ladebehälter 21 auf, wodurch die Menge des Schüttguts S wächst. Die Kamera 19 erfasst optisch den Auftreffpunkt P des Ernteguts 22 sowie die Abmessungen und die Befüllung des Ladebehälters 21 und leitet aus den Informationen durch Bildauswertung den Befüllzustand des Ladebehälter 21 ab.

Es sei angemerkt, dass statt einer Kamera 19 auch eine andere oder anders gestaltete Einrichtung zur Erfassung eines Füllzustands des Ladebehälters zum Einsatz kommen kann. Beispielsweise könnte die Kamera alternativ oder ergänzend am Ladebehälter 21 angeordnet sein, um - bedingt durch eine andere Perspektive - den Füllzustand insbesondere beim Überladen nach hinten besser erfassen zu können als die am Auswurfkrümmer 10 angeordnete Kamera 19. Auch eine Waage zur Füllzustandserfassung des Ladebehälters 21 wäre denkbar.

Da gemäß Fig. 3a der Ladebehälter 21 erst in geringem Maße befüllt ist und demnach - aufgrund des hohen Überstands der Bordwände des Ladebehälters 21 - keine Gefahr von Erntegutverlusten besteht, wird das Erntegut 22 erfindungsgemäß stark beschleunigt, um mit einer hohen Geschwindigkeit v₃ (angedeutet als langer Vektorpfeil) den Auftreffpunkt P zu erreichen, so dass das Schüttgut S eine möglichst hohe Verdichtung aufweist. Die Ladekapazität des Ladebehälters 21 kann damit in hohem Maße ausgeschöpft werden.

Mit zunehmender Befüllung des Ladebehälters 21 nimmt die Gefahr von Erntegutverlusten zu. Beim Überladen nach hinten besteht diese Gefahr aufgrund der größeren Wurfweite des Ernteguts bis zum Auftreffpunkt und der daher erforderlichen höheren Wurfleistung in erhöhtem Maße.

In Fig. 3b, welche eine gegenüber Fig. 3a fortgeschrittene Befüllsituation zeigt, hat die Kamera 19 durch Bildauswertung erkannt, dass eine kritische Befüllung des Ladebehälters 21 erreicht worden ist. Um Erntegutverluste zu vermeiden, ist erfindungsgemäß der Zustand des Auswurfkrümmers 10 so verändert worden, dass das Erntegut 22 nun mit einer höheren, stärker bogenförmigen Wurfbahn in den Ladebehälter 21 ausgeworfen wird. Dazu ist der Auswurfkrümmer 10 mittels des Hubzylinders 12 (vgl. Fig. 1) in einer höhere Position gestellt worden. Weiterhin ist die vom Nachbeschleuniger 5 aufgebrachte Beschleunigung reduziert worden, wodurch auch eine Energieeinsparung erzielt wird.
Aufgrund der veränderten Wurfbahn trifft das Erntegut 22 gemäß Fig. 3b mit einer geringen Geschwindigkeit v₄ (angedeutet als kurzer Vektorpfeil) im Auftreffpunkt P im Ladebehälter 21 auf. Die vom Betrag her geringe und nun fast vertikal gerichtete Geschwindigkeit v₄ im Auftreffpunkt P verhindert, dass Erntegut 22 über die - jetzt nur noch einen geringen Überstand aufweisende - Bordwand des Ladebehälters 21 hinausgeblasen wird.

In erfindungsgemäßer Weise sorgt gemäß den Fig. 3a und 3b somit die durch Veränderung der Wurfbahn vorgenommene Beeinflussung der Auftreffgeschwindigkeit (hinsichtlich deren Betrag und Richtung) des Ernteguts in Abhängigkeit von Füllzustand des Ladebehälters für einen effizienteren Ladevorgang. Zur Beeinflussung der Auftreffgeschwindigkeit dienen eine Zustandsverstellung der Überladeeinrichtung 10 und eine Veränderung der Beschleunigung des Ernteguts im Nachbeschleuniger 5, vorzugsweise vorgenommen durch eine Spaltverstellung mittels des Stellmotors 8 (vgl. Erläuterung zu Fig. 1). Die Verstellungen werden durch die Steuereinrichtung 16 veranlasst, welche wiederum von der Kamera 19 die Information über den für die Verstellung relevanten Füllzustand erhält.

Es sei darauf hingewiesen, dass die Überladesituationen der Fig. 2a, 2b und 3a, 3b beispielhafte Anwendungen der Erfindung wiedergeben. Beeinflussungen der im Auftreffpunkt erreichten Geschwindigkeit (ob hinsichtlich deren Betrag und/oder Richtung) können auch durch andere Maßnahmen bzw. Kombinationen von Maßnahmen erreicht werden.

**Bezugszeichenliste**

| | | | |
|---|---|---|---|
| 1 | Feldhäcksler | S | Schüttgut |
| 2 | Häckselaggregat | P | Auftreffpunkt |
| 3 | Förderschacht | | |
| 4 | Konditioniereinrichtung | | |
| 5 | Nachbeschleuniger | | |
| 6 | Nachbeschleunigertrommel | | |
| 7 | Schaufel | | |
| 8 | Stellmotor | | |
| 9 | Spaltmaßsensor | | |
| 10 | Auswurfkrümmer | | |
| 11 | Auswurfklappe | | |
| 12 | Hubzylinder | | |
| 13 | Stellzylinder | | |
| 14 | Höhensensor | | |
| 15 | Winkelsensor | | |
| 16 | Steuerungseinrichtung | | |
| 17 | Schalter | | |
| 18 | Ausgabeeinheit | | |
| 19 | Kamera | | |
| 20 | Schlepper | | |
| 21 | Ladebehälter | | |
| 22 | Erntegut | | |
| 23 | Fahrerkabine | | |

## Patentansprüche

1. Landwirtschaftliche Erntemaschine (1) mit zumindest einem Förderorgan (5) zur Beschleunigung von Erntegut (22) und einer dem Förderorgan (5) nachgeordneten Überladeeinrichtung (10), durch die das beschleunigte Erntegut (22) ausgeworfen wird, um in einem Auftreffpunkt (P) in einem Ladebehälter (21) aufzutreffen, **gekennzeichnet durch** eine Einrichtung (19) zur Erfassung eines Füllzustands des Ladebehälters (21) sowie **durch** Mittel (8, 12, 13, 16) zur Veränderung der Geschwindigkeit des Ernteguts (22) im Auftreffpunkt (P) in Abhängigkeit vom Füllzustand des Ladebehälters (21).

2. Landwirtschaftliche Erntemaschine nach Anspruch 1, **gekennzeichnet durch** eine Steuereinheit (16), die betreibbar ist, **durch** Ansteuerung des Förderorgans (5) die Beschleunigung des Ernteguts (22) zu verändern.

3. Landwirtschaftliche Erntemaschine nach Anspruch 1 oder 2, **dadurch gekennzeichnet, dass** es sich bei dem Förderorgan um einen Nachbeschleuniger (5) handelt, wobei die Beschleunigung des Ernteguts (22) durch Verstellung einer Drehzahl und/oder einer Spaltweite und/oder einer Schaufelstellung und/oder einer Luftzuführung des Nachbeschleunigers (5) veränderlich ist.

4. Landwirtschaftliche Erntemaschine nach einem der vorigen Ansprüche, **gekennzeichnet durch** eine Steuereinheit (16), die betreibbar ist, **durch** Ansteuerung zumindest eines der Überladeeinrichtung (10) zugeordneten Aktors (12, 13) einen die Wurfbahn des Ernteguts (22) beeinflussenden Zustand der Überladeeinrichtung (10) zu verändern.

5. Landwirtschaftliche Erntemaschine nach einem der vorigen Ansprüche, **dadurch gekennzeichnet, dass** der Überladeeinrichtung (10) ein Aktor (12) zu deren Höhenverstellung und/oder ein Aktor (13) zur Veränderung eines Abwurfwinkels und/oder ein Aktor zur Längenverstellung der Überladeeinrichtung zugeordnet ist, wobei der Aktor (12, 13) von der Steuereinheit (16) ansteuerbar ist.

6. Landwirtschaftliche Erntemaschine nach einem der vorigen Ansprüche, **dadurch gekennzeichnet, dass** die Einrichtung zur Füllzustandserfassung eine auf den Auftreffpunkt (P) des Ernteguts (22) gerichtete Kamera (19) umfasst, wobei die Einrichtung betreibbar ist, aus dem erfassten Bild der Kamera (19) einen Befüllzustand des Ladebehälters (21) abzuleiten.

7. Landwirtschaftliche Erntemaschine nach einem der vorigen Ansprüche, **dadurch gekennzeichnet, dass** der Befüllzustand Informationen über die Höhe der Befüllung zumindest in einem Bereich des Ladebehälters (21) umfasst.

8. Landwirtschaftliche Erntemaschine nach einem der vorigen Ansprüche, **dadurch gekennzeichnet, dass** der Befüllzustand Informationen über die Kontur der Befüllung zumindest in einem Bereich des Ladebehälters (21) umfasst.

9. Landwirtschaftliche Erntemaschine nach einem der Ansprüche 6 bis 8, **dadurch gekennzeichnet, dass** die Einrichtung zur Füllzustandserfassung betreibbar ist, aus dem erfassten Bild der Kamera (19) die Lage des Auftreffpunktes (P) des Ernteguts (22) relativ zu den seitlichen Begrenzungen des Ladebehälters (21) abzuleiten.

10. Landwirtschaftliche Erntemaschine nach einem der vorigen Ansprüche, **dadurch gekennzeichnet, dass** die Steuereinheit (16) betreibbar ist, bei einer geringen Befüllung des Ladebehälters (21) einen Überladezustand herbeizuführen, bei dem das im Ladebehälter (21) auftreffende Erntegut (22) eine hohe Verdichtung erreicht.

11. Landwirtschaftliche Erntemaschine nach einem der vorigen Ansprüche, **dadurch gekennzeichnet, dass** die Steuereinheit (16) betreibbar ist, einen Überladezustand herbeizuführen, bei dem das Erntegut (22) im Auftreffpunkt (P) mit einem annähernd rechten Winkel auf eine Oberfläche im Ladebehälter (21) auftrifft.

12. Landwirtschaftliche Erntemaschine nach einem der vorigen Ansprüche, **dadurch gekennzeichnet, dass** die Steuereinheit (16) betreibbar ist, bei Annäherung oder Erreichen eines kritischen Füllzustands einen Überladezustand herbeizuführen, bei dem sich im Auftreffpunkt (P) eine Geschwindigkeit des Ernteguts (22) ergibt, die keine Erntegutverluste verursacht.

13. Landwirtschaftliche Erntemaschine nach einem der vorigen Ansprüche, **dadurch gekennzeichnet, dass** es sich bei dieser um einen selbstfahrenden Feldhäcksler (1) handelt.

## Claims

1. An agricultural harvester (1) comprising at least one conveyor member (5) for accelerating crop material (22) and a transloading device (10) which is arranged downstream of the conveyor member (5) and by which the accelerated crop material (22) is ejected to impinge in a load container (21) at an impingement point (P), **characterised by** a device (19) for detecting a filling state of the load container (21) and by means (8, 12, 13, 16) for changing the speed of the crop material (22) at the impingement point (P) in dependence on the filling state of the load container (21).

2. An agricultural harvester according to claim 1 **characterised by** a control unit (16) operable to change the acceleration of the crop material (22) by actuation of the conveyor member (5).

3. An agricultural harvester according to claim 1 or claim 2 **characterised in that** the conveyor member is a post-accelerating device (5), wherein the acceleration of the crop material (22) is variable by adjustment of a rotary speed and/or a gap width and/or a blade position and/or an air feed of the post-accelerating device (5).

4. An agricultural harvester according to one of the preceding claims **characterised by** a control unit (16) operable to change a state of the transloading device (10), that influences the trajectory of the crop material (22), by operation of at least one actuator (12, 13) associated with the transloading device (10).

5. An agricultural harvester according to one of the preceding claims **characterised in that** associated with the transloading device (10) is an actuator (12) for height adjustment thereof and/or an actuator (13) for altering an ejection angle and/or an actuator for length adjustment of the transloading device, wherein the actuator (12, 13) is operable by the control unit (16).

6. An agricultural harvester according to one of the preceding claims **characterised in that** the device for detecting the filling state includes a camera (19) directed on to the impingement point (P) of the crop material (22), wherein the device is operable to derive from the detected image of the camera (19) a filling state of the load container (21).

7. An agricultural harvester according to one of the preceding claims **characterised in that** the filling state includes information about the height of the filling at least in a region of the load container (21).

8. An agricultural harvester according to one of the preceding claims **characterised in that** the filling state includes information about the contour of the filling at least in a region of the load container (21).

9. An agricultural harvester according to one of claims 6 to 8 **characterised in that** the device for detecting the filling state is operable to derive from the detected image of the camera (19) the position of the impingement point (P) of the crop material (22) relative to the lateral boundaries of the load container (21).

10. An agricultural harvester according to one of the preceding claims **characterised in that** the control unit (16) is operable, upon slight filling of the load container (21), for implementing a transloading state in which the crop material (22) impinging in the load container (21) achieves a high level of compacting.

11. An agricultural harvester according to one of the preceding claims **characterised in that** the control unit (16) is operable to implement a transloading state in which the crop material (22) at the impingement point (P) impinges on a surface in the load container (21) at an approximately right angle.

12. An agricultural harvester according to one of the preceding claims **characterised in that** the control unit (16) is operable when a critical filling state is approached or reached, to implement a transloading state in which a speed is produced for the crop material (22) at the impingement point (P), which does not cause any crop material losses.

13. An agricultural harvester according to one of the preceding claims **characterised in that** it is a self-propelled forage harvester (1).

## Revendications

1. Machine agricole de récolte (1) pourvue d'au moins un organe de transport (5) pour accélérer un produit de récolte (22) et d'un dispositif de transbordement (10) placé en aval de l'organe de transport (5), par lequel le produit de récolte (22) accéléré est éjecté pour atteindre un point d'impact (P) dans un réservoir de chargement (21), **caractérisée par** un dispositif (19) de détection d'un état de remplissage du réservoir de chargement (21) ainsi que par des moyens (8, 12, 13, 16) pour modifier la vitesse du produit de récolte (22) au point d'impact (P) en fonction de l'état de remplissage du réservoir de chargement (21).

2. Machine agricole de récolte selon la revendication 1, **caractérisée par** une unité de commande (16) qui permet de modifier l'accélération du produit de récolte (22) par commande de l'organe de transport (5).

3. Machine agricole de récolte selon la revendication 1 ou 2, **caractérisée en ce que** l'organe de transport est un accélérateur d'éjection (5), l'accélération du produit de récolte (22) étant modifiable par réglage d'une vitesse de rotation et/ou d'une largeur de fente et/ou d'une position des pales et/ou d'une alimentation en air de l'accélérateur d'éjection (5).

4. Machine agricole de récolte selon l'une des revendications précédentes, **caractérisée par** une unité de commande (16) qui permet, par commande d'au moins un actionneur (12, 13) associé au dispositif de transbordement (10), de modifier un état du dispositif de transbordement (10) ayant une influence sur la trajectoire d'éjection du produit de récolte (22).

5. Machine agricole de récolte selon l'une des revendications précédentes, **caractérisée en ce qu'**au dispositif de transbordement (10) est associé un actionneur (12) pour son réglage en hauteur et/ou un actionneur (13) pour modifier un angle d'éjection et/ou un actionneur pour le réglage en longueur du dispositif de transbordement, l'actionneur (12, 13) pouvant être commandé par l'unité de commande (16).

6. Machine agricole de récolte selon l'une des revendications précédentes, **caractérisée en ce que** le dispositif de détection de l'état de remplissage comprend une caméra (19) dirigée sur le point d'impact (P) du produit de récolte (22), lequel dispositif permet de déduire de l'image détectée par la caméra (19) un état de remplissage du réservoir de chargement (21).

7. Machine agricole de récolte selon l'une des revendications précédentes, **caractérisée en ce que** l'état de remplissage comprend des informations sur la hauteur du remplissage au moins dans une zone du réservoir de chargement (21).

8. Machine agricole de récolte selon l'une des revendications précédentes, **caractérisée en ce que** l'état de remplissage comprend des informations sur le contour du remplissage au moins dans une zone du réservoir de chargement (21).

9. Machine agricole de récolte selon l'une des revendications 6 à 8, **caractérisée en ce que** le dispositif de détection de l'état de remplissage permet de déduire de l'image détectée par la caméra (19) la position du point d'impact (P) du produit de récolte (22) par rapport aux délimitations latérales du réservoir de chargement (21).

10. Machine agricole de récolte selon l'une des revendications précédentes, **caractérisée en ce que** l'unité de commande (16) permet, en cas de faible remplissage du réservoir de chargement (21), de produire un état de transbordement dans lequel le produit de récolte (22) atteignant le réservoir de chargement (21) atteint un compactage élevé.

11. Machine agricole de récolte selon l'une des revendications précédentes, **caractérisée en ce que** l'unité de commande (16) permet de produire un état de transbordement dans lequel le produit de récolte (22) atteint le point d'impact (P) en formant un angle à peu près droit avec une surface du réservoir de chargement (21).

12. Machine agricole de récolte selon l'une des revendications précédentes, **caractérisée en ce que** l'unité de commande (16) permet, à l'approche ou à l'atteinte d'un état de remplissage critique, de créer un état de transbordement où la vitesse du produit de récolte (22) obtenue au point d'impact (P) ne provoque pas de pertes de récolte.

13. Machine agricole de récolte selon l'une des revendications précédentes, **caractérisée en ce qu'**il s'agit d'une ensileuse automotrice (1).
